# EUROPEAN PATENT SPECIFICATION

(11) **EP 2 522 583 B1**
(45) Date of publication and mention of the grant of the patent: **16.10.2013**
(21) Application number: 12380022.9
(22) Date of filing: 10.05.2012
(51) Int. Cl.: B65B 43/12, B65B 43/46, B65G 47/90

(54) **Transfer device for transferring empty flexible packages from a package row to two or more package rows applicable to an automatic packaging machine**
Überführungsvorrichtung zum Überführen leerer flexibler Verpackungen von einer Verpackungsreihe zu zwei oder mehr Verpackungsreihen, verwendbar in einer automatischen Verpackungsmaschine
Dispositif de transfert pour transférer des récipients souples vides d'une rangée de récipients à deux ou plusieurs rangées de récipients, applicable à une machine d'emballage automatique

(30) Priority: 11.05.2011 ES 201100518
(43) Date of publication of application: 14.11.2012
(73) Proprietor: Mespack, S.L., 08130 Santa Perpètua de Mogoda (Barcelona) (ES)
(72) Inventor: Marti Roche, Enric, 08130 Santa Perpètua de Mogoda (Barcelona) (ES); Fité Sala, Menna, 08130 Santa Perpètua de Mogoda (Barcelona) (ES); Mora Flores, Francisco, 08130 Santa Perpètua de Mogoda (Barcelona) (ES)
(74) Representative: Torner Lasalle, Elisabet

(56) References cited:
- EP-A1- 1 479 607
- ES-A1- 2 226 517

## Description

### Field of the Art

The present invention generally relates to a transfer device for transferring empty flexible containers from one row of containers to two or more rows of containers applicable to an automatic packaging machine, and more particularly to a transfer device for transferring empty flexible containers which are supplied by a container forming unit or a preformed container supply unit arranged in a row in which the flexible containers are aligned in a horizontal longitudinal direction and orientated in one and the same vertical plane to a filling unit in which the flexible containers are arranged in two or more rows with the flexible containers aligned in respective horizontal longitudinal directions and orientated in respective vertical planes symmetrical with respect to the plane of the supply container row.

### Background of the Invention

Document ES 2117929 A1 describes a transfer device for transferring empty flexible containers from a row of containers supplied by a container forming unit to grippers which are moved in a carousel of a container filling and closing unit in an automatic horizontal packaging machine. The container forming unit is configured to form the containers from sheet material unwound from a reel and supply the containers arranged in a row in which the flexible containers are aligned in a horizontal longitudinal direction and orientated in one and the same vertical plane, and the grippers of the carousel of the filling unit hold the containers arranged in a single row located in the same plane as the supply container row although at a higher level. Therefore the transfer device is limited to vertically move the containers one by one from the level of the supply container row to the level of the filling container row.

Document ES 2229836 A1 describes a gripper device for a carousel of a flexible container filling and closing unit of an automatic horizontal packaging machine which is designed to hold two flexible containers arranged in parallel. By means of double grippers of this type the flexible containers are arranged in two rows in which the flexible containers are aligned in respective horizontal longitudinal directions and orientated in respective parallel vertical planes in the carousel of the filling unit.

Document ES 2226517 A1 discloses a transfer device for transferring empty flexible containers arranged in a row in which the flexible containers are aligned in a horizontal longitudinal direction and orientated in one and the same vertical plane to a filling unit provided with double grippers such as that described in the mentioned document ES 2229836 A1, in which the flexible containers are arranged in two rows with the flexible containers aligned in respective horizontal longitudinal directions and orientated in respective vertical planes mutually parallel but perpendicular to the plane of the supply container row. Therefore the transfer device needs to rotate the containers ninety degrees to transfer them from the supply container row to the two filling container rows.

### Disclosure of the Invention

The present invention provides a transfer device for transferring empty flexible containers from one row of containers to two or more rows of containers applicable to an automatic packaging machine wherein said automatic packaging machine comprises a container forming unit or a preformed container supply unit provided with means for supplying a supply container row, in which flexible containers are aligned in a horizontal longitudinal direction X and orientated in one and the same vertical plane, and a filling unit provided with means for filling flexible containers arranged in at least two parallel filling container rows and closing them, and wherein said transfer device comprises means for transferring the flexible containers from said supply container row to said filling container rows.

The transfer device of the present invention comprises at least two transverse guide elements fixed to a base support in positions parallel to a horizontal transverse direction Y perpendicular to said supply container row, at least two gripper-holding carriages coupled to said transverse guide elements such that they can be moved simultaneously in opposite directions along same by transverse operating means, at least two vertical guide elements respectively fixed to said gripper-holding carriages in positions parallel to a vertical direction Z, at least two guide supports respectively coupled to said vertical guide elements such that they can be moved along same by vertical operating means, at least two longitudinal guide elements respectively fixed to said guide supports in positions parallel to said longitudinal direction X; at least two respective gripper supports coupled to said longitudinal guide elements such that they can be moved along same, at least two cam followers respectively assembled in said gripper supports and coupled to guide cams arranged in the corresponding gripper-holding carriages to move the gripper supports along the longitudinal guide elements when the guide supports are moved along the vertical guide elements, and at least two grippers respectively supported in the gripper supports and operated by respective gripper actuators to be moved between open and closed positions.

The mentioned vertical operating means comprise a vertical movement actuator controlled to simultaneously move the guide supports in said vertical direction Z between a lower position in which the grippers are in a suitable position to grip corresponding contiguous flexible containers from the supply container row, and an upper position in which the grippers are in a suitable position to release the flexible containers at the level of the filling container rows which are above the supply container row.

The mentioned guide cams define a combined trajectory in the vertical direction Z and in the longitudinal direction X, such that as a result of the movements of the guide supports in the vertical direction Z, the gripper supports are moved between a gripping position which is reached when the guide supports are in said lower position and in which the grippers are separated in said longitudinal direction X by a distance equivalent to the distance between two contiguous flexible containers in the supply container row, and a delivery position which is reached when the guide supports are in said upper position and in which the grippers are separated in the longitudinal direction X by a distance equivalent to the distance between two contiguous flexible containers in the filling container rows.

The mentioned transverse operating means comprise a transverse movement actuator controlled to simultaneously move the gripper-holding carriages in said transverse direction Y between an aligned position which is simultaneous with the lower position of the guide supports and in which the grippers are aligned with the supply container row, and a misaligned position which is simultaneous with the upper position of the guide supports and in which the grippers are mutually misaligned and respectively aligned with the filling container rows. In one embodiment, the vertical planes corresponding to the filling container rows are in an arrangement symmetrical with respect to the vertical plane in which it finds the supply container row.

With this arrangement, the transfer device of the present invention moves the flexible containers in combined diagonal trajectories in the longitudinal, transverse and vertical directions X, Y, Z to transfer them from the supply container row to the two or more filling container rows. If, for example, the filling unit of the automatic packaging machine includes a carousel along which carousel double grippers, each of which is capable of holding two flexible containers arranged in parallel, are moved step by step the transfer device will deliver a flexible container to each of two contiguous carousel grippers in each cycle, such that each carousel gripper will be loaded with two flexible containers in two consecutive cycles.

The way of generalising the device of the present invention to transfer flexible containers from a supply container row to carousel grippers capable of holding more than two flexible containers arranged in parallel will easily occur to a person skilled in the art.

### Brief Description of the Drawings

The foregoing and other features and advantages will be better understood from the following detailed description of an embodiment with reference to the attached drawings, in which:
Fig. 1 is a perspective view showing a front side of a transfer device according to an embodiment of the present invention in a gripping position;
Fig. 2 is a perspective view showing a rear side of the transfer device in said gripping position;
Fig. 3 is a perspective view showing the front side of the transfer device in a delivery position;
Fig. 4 is a perspective view showing the rear side of the transfer device in said delivery position;
Fig. 5 is a schematic front view showing the arrangement of guide cams in detail;
Fig. 6 is a cross-section view taken through a transverse vertical plane of the transfer device showing vertical movement operating means; and
Fig. 7 is a schematic plan view illustrating the movements of grippers of the transfer device in relation to a supply container row and two filling container rows.

### Detailed Description of an Exemplary Embodiment

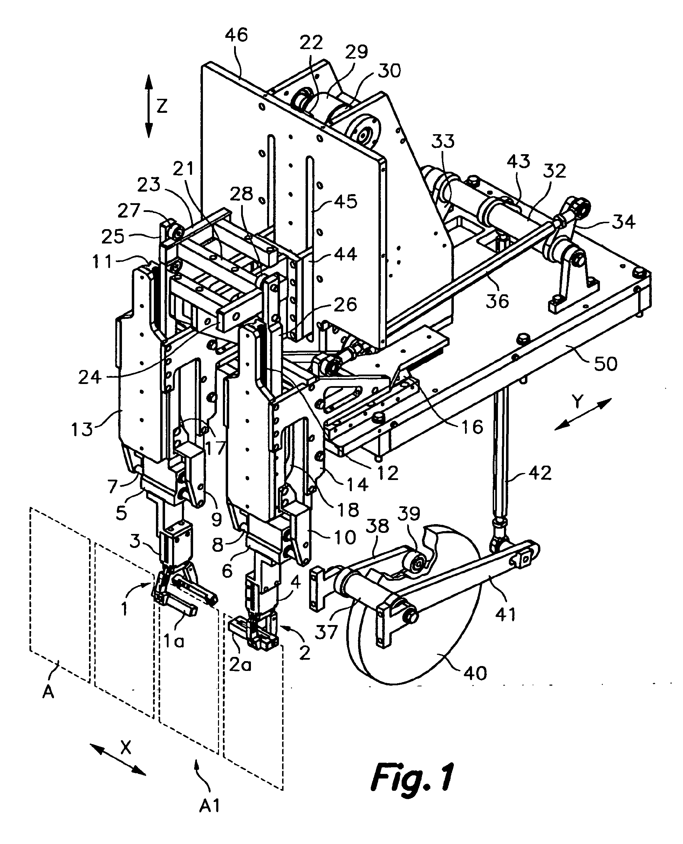

Referring first to Figs. 1 to 4, there is shown a transfer device according to an embodiment of the present invention. The transfer device serves to transfer empty flexible containers from one row of containers to two or more rows of containers applicable to an automatic packaging machine. In the embodiment illustrated in Figs. 1 to 4, the transfer device is suitable for an automatic packaging machine comprising a container forming unit or a preformed container supply unit (not shown) provided with means for supplying a supply container row A1 in which flexible containers A are aligned in a horizontal longitudinal direction X and orientated in one and the same vertical plane, and a filling unit (not shown) provided with means for filling flexible containers A arranged in two parallel filling container rows A2, A3, and closing the containers once they are filled.

As described below, the transfer device of the present invention comprises means for transferring the flexible containers A from said supply container row A1 to said two filling container rows A2, A3. From the following description and from the attached drawings, a person skilled in the art could easily come up with the way of generalising the device of the present invention to transfer flexible containers from a supply container row to more than two filling container rows.

The transfer device comprises a base support 50 which in an operating situation is fixed in relation to a frame of the automatic packaging machine (not shown). Two transverse guide elements 15, 16 are fixed on said base support 50 arranged in positions parallel to a horizontal transverse direction Y, perpendicular to said longitudinal direction X in which the supply container row A1 is arranged. Two gripper-holding carriages 13, 14 are respectively coupled to said transverse guide elements 15, 16 such that they can be moved along same. Transverse operating means, which will be described in detail below, are arranged to move said gripper-holding carriages 13, 14 simultaneously in opposite directions along the transverse guide elements 15, 16.

The two gripper-holding carriages 13, 14 define vertical passages in which there are fixed respective vertical guide elements 11, 12 arranged in positions parallel to a vertical direction Z, and corresponding guide supports 9, 10 are coupled to said vertical guide elements 11, 12 such that they can be moved along same. Vertical operating means, which will be described in detail below, are arranged to simultaneously move said guide supports 9, 10 in the same directions along the vertical guide elements 11, 12.

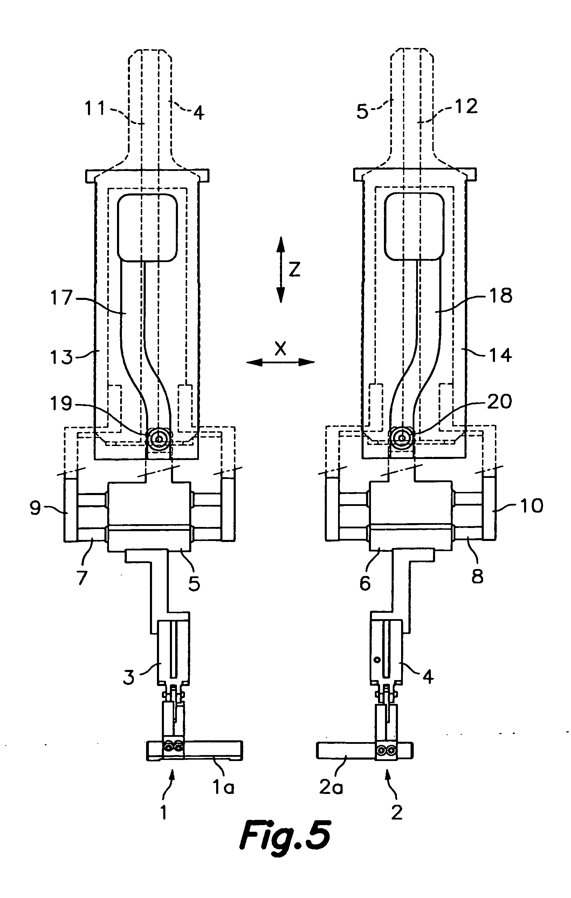

The guide supports 9, 10 have forks at their lower ends supporting respective longitudinal guide elements 7, 8 arranged in positions parallel to said longitudinal direction X. Two respective gripper supports 5, 6 are coupled to said longitudinal guide elements 7, 8 such that they can be moved along same. There are assembled in the mentioned gripper supports 5, 6 respective cam followers 19, 20 (Fig. 5) coupled to guide cams 17, 18 arranged in the corresponding gripper-holding carriages 13, 14. Therefore, as the result of the cooperation of the cam followers 19, 20 with the guide cams 17, 18, the gripper supports 5, 6 are moved along the longitudinal guide elements 7, 8 when the guide supports 9, 10 are moved along the vertical guide elements 11, 12.

In each of the two gripper supports 5, 6 there is assembled a corresponding gripper 1, 2 provided with a pair of jaws la, 2a. The two grippers 1, 2 are operated by respective conventional gripper actuators 3, 4 to move their corresponding jaws 1a, 2a between open and closed positions.

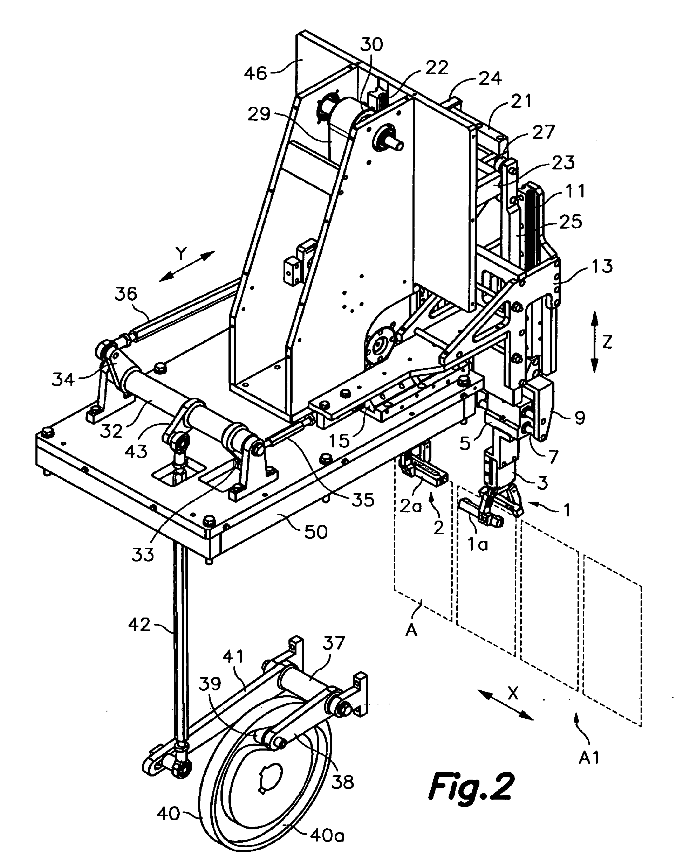

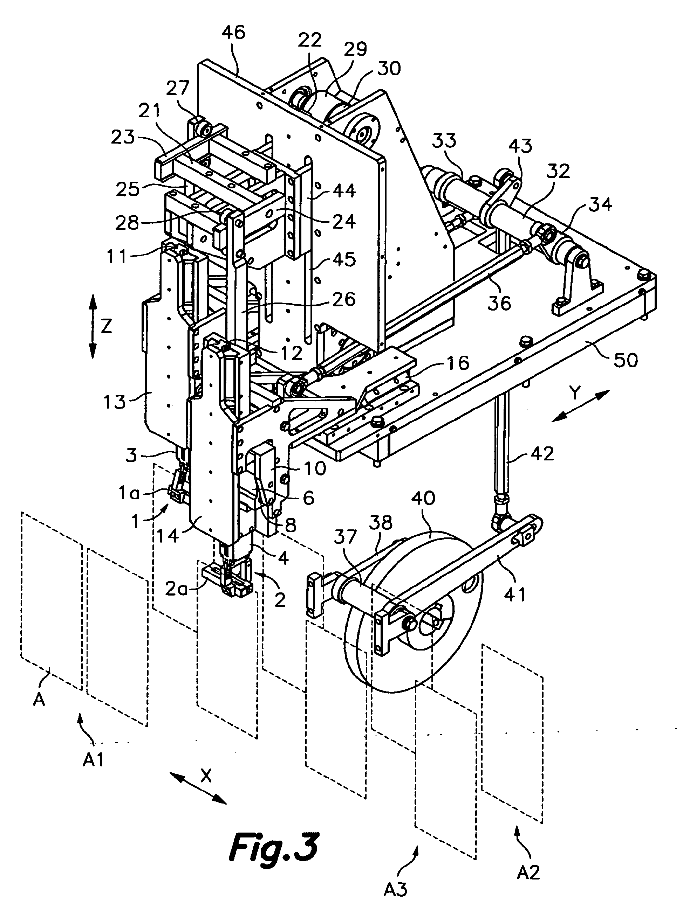

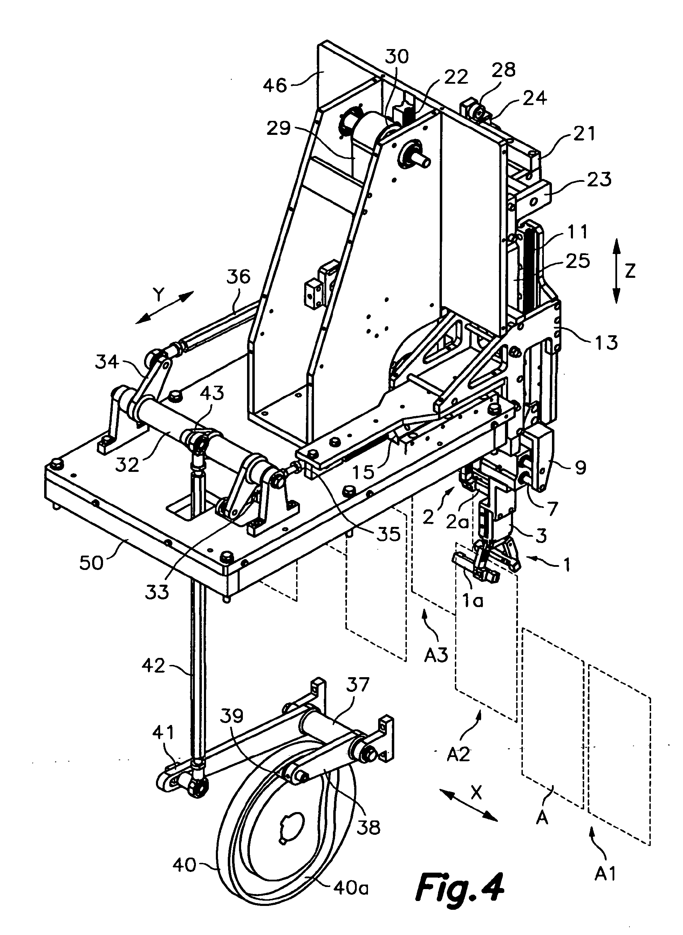

The aforementioned vertical operating means comprise a vertical movement actuator (not shown) controlled to simultaneously move the guide supports 9, 10 in said vertical direction Z between a lower position (Figs. 1 and 2) in which the grippers 1, 2 are in a suitable position to grip two corresponding contiguous flexible containers A from the supply container row A1, and an upper position (Figs. 3 and 4) in which the grippers 1, 2 are in a suitable position to release the flexible containers A at the level of the filling container rows A2, A3 which are above the supply container row A1.

As better shown in Fig. 5 the guide cams 17, 18 define combined trajectories in the longitudinal and vertical directions X, Z, as the result of which the gripper supports 5, 6 are moved between a gripping position (Figs. 1 and 2) which is reached when the guide supports 9, 10 are in said lower position and in which the grippers 1, 2 are separated in said longitudinal direction X by a distance equivalent to the distance between two contiguous flexible containers A in the supply container row A1, and a delivery position (Figs. 3 and 4) which is reached when the guide supports 9, 10 are in said upper position and in which the grippers 1, 2 are separated in the longitudinal direction X by a distance equivalent to the distance between two contiguous flexible containers A in the filling container rows A2, A3.

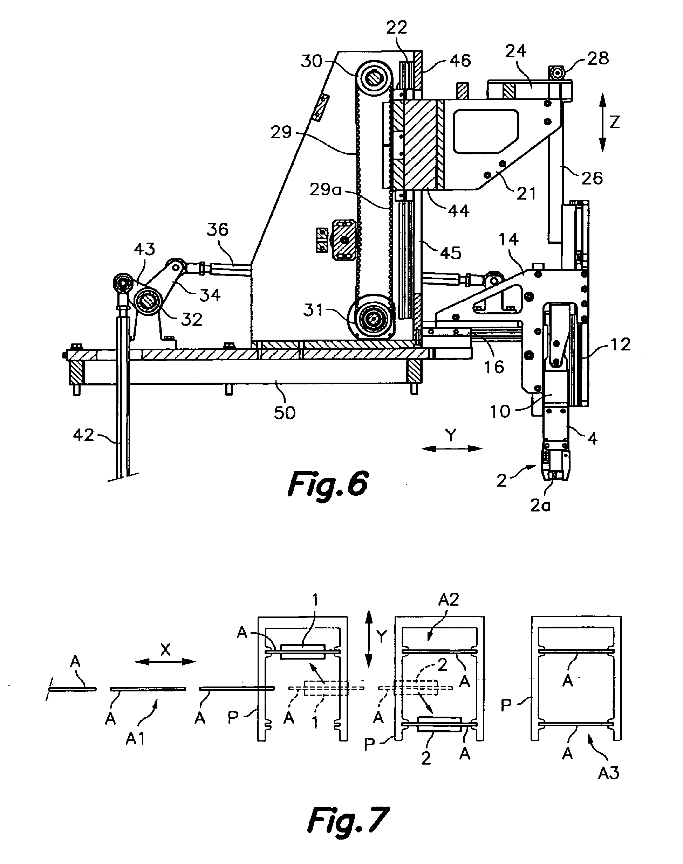

As shown in Fig. 7, this movement of the guide supports 9, 10 in the longitudinal direction X is necessary because the gap between the flexible containers A in the filling container rows A2, A3 is larger than the gap between the flexible containers A in the supply container row A1. This larger gap is due to the fact that the filling container rows A2, A3 are formed, for example, by flexible containers A secured in a plurality of carousel grippers P, each of which is provided with gripping means for holding two flexible containers A in parallel, and said carousel grippers P are coupled to a carousel (not shown) moving them along an endless trajectory. The gap between the carousel grippers P in the carousel determines the larger gap between the flexible containers A in the filling container rows A2, A3. Furthermore, although it can not be seen in Fig. 7, the filling container rows A2, A3 are located at a level higher than the supply container row A1.

The aforementioned transverse operating means comprise a transverse movement actuator (not shown) controlled to simultaneously move the gripper-holding carriages 13, 14 in said transverse direction Y between an aligned position (Figs. 1 and 2) which is simultaneous with the lower position of the guide supports 9, 10 and in which the grippers 1, 2 are aligned with the supply container row A1, and a misaligned position (Figs. 3 and 4) which is simultaneous with the upper position of the guide supports 9, 10 and in which the grippers 1, 2 are mutually misaligned and respectively aligned with the filling container rows A2, A3. In the embodiment shown, when the gripper-holding carriages 13, 14 are in said misaligned position, the grippers 1, 2 are aligned with vertical planes symmetrical with respect to the vertical plane in which the supply container row A1 is orientated, in accordance with the positions of the two filling container rows A2, A3.

Figs. 1 to 4 show one of the two grippers 1 in the open position and the other gripper 2 in the closed position for merely illustrative purposes. Nevertheless, during the operation of the transfer device, the two grippers 1, 2 reach the lower position (Figs. 1 and 2) with their jaws la, 2a arranged in the open position, and are then moved to the closed position to grip the two contiguous flexible containers A from the supply container row A1, and the two grippers 1, 2 reach the upper position (Figs. 3 and 4) with their jaws la, 2a arranged in the closed position carrying respective flexible containers A, and are then moved to the open position to deliver the two flexible containers A to the two corresponding filling container rows A2, A3.

The vertical operating means comprise a raising carriage 21 having support arms 44 inserted in grooves 45 formed in a vertical plate 46 fixed with respect to the base support 50. In a rear side of said vertical plate 46 there is fixed a raising vertical guide element 22 arranged in a position parallel to the vertical direction Z, and said support arms 44 of the raising carriage 21 are coupled to said raising vertical guide element 22 such that the raising carriage 21 can slide along same and along said grooves 45.

As shown in Fig. 6, in the embodiment illustrated the vertical operating means further comprise an endless belt 29 assembled on pulleys 30, 31 arranged such that said endless belt 29 has a vertical section 29a adjacent to the vertical plate 46, and the support arms 44 of the raising carriage 21 are connected to said vertical section of the endless belt. The vertical movement actuator (not shown) is operatively connected to rotate one of said pulleys 30, 31, for example, the upper pulley 30, and thereby alternately move the endless chain or belt 29 and the raising carriage 21 in opposite directions. Two connection members 25, 26 transmit the movements of the raising carriage 21 in the vertical direction Z to the guide supports 9, 10 while at the same time allow the movements of the guide supports 9, 10 together with the gripper-holding carriages 13, 14 in the transverse direction Y.

To that end, in the raising carriage 21 there are fixed two raising transverse guide elements 23, 24 arranged in positions parallel to the transverse direction Y, and said connection members 25, 26 have respective lower ends fixed to the guide supports 9, 10 and respective upper ends provided with rolling means 27, 28 respectively coupled to said raising transverse guide elements 23, 24 such that they can be moved along same. It will be understood that alternatively the endless belt 29 can be replaced by a roller chain or another similar flexible traction element, and that the rolling means 27, 28 can be replaced by sliding means without departing from the scope of the present invention.

Also alternatively, the means for moving the raising carriage 21 in the vertical direction Z along the raising vertical guide element 22 can include a mechanical transmission different from a belt or chain assembled on pulleys, such as a cam mechanism, oscillating shaft and connecting rod, for example, operated by a specific actuator or even by the same transverse movement actuator.

In the illustrated embodiment, the transverse operating means comprise an oscillating shaft 32 assembled on the base support 50 in a position parallel to the longitudinal direction X. Said transverse movement actuator (not shown) is operatively connected by a mechanical transmission to alternately rotate the oscillating shaft 32 a predetermined angle in opposite directions. Two rocker arms 33, 34 are fixed at the ends of the oscillating shaft 32 and a lever arm 43 is fixed to a mid-region of the oscillating shaft 32. The oscillating movement of the oscillating shaft 32 is converted into a linear back and forth movement and transmitted to the gripper-holding carriages 13, 14 by two connecting rods 35, 36 having first ends respectively connected to said rocker arms 33, 34 by means of corresponding articulations and second ends respectively connected to the gripper-holding carriages 13, 14 by means of other corresponding articulations.

A follower shaft 37 having a follower arm 38 and a transmission arm 41 fixed thereto is arranged underneath the base support 50. A cam follower 39 in the form of a small roller, which is inserted in a groove 40a defining a rotating cam profile 40 is assembled in the mentioned follower arm 38. The mentioned transverse movement actuator (not shown) is operatively connected to rotate the rotating cam 40. The cam follower 39 imparts an oscillating movement to the follower shaft 37 by following the rotating cam profile 40, and the oscillating movement of the follower shaft 37 is transmitted to the oscillating shaft 32 by an oscillation transmission element 42 having a first end connected in an articulated manner to said transmission arm 41 fixed to the follower shaft 37 and a second end connected in an articulated manner to the lever arm 43 fixed to the oscillating shaft 32.

The vertical and transverse movement actuators (not shown) are preferably electric motors, and more preferably electrically controlled servomotors to accurately coordinate the movements of the mobile parts and the positioning of the grippers 1, 2 in relation to the supply container row A1 and the two filling container rows A2, A3.

Modifications and variations with respect to the embodiment shown and described will occur to a person skilled in the art without departing from the scope of the present invention as it is defined in the attached claims.

## Claims

1. A transfer device for transferring empty flexible containers from one row of containers to two or more rows of containers applicable to an automatic packaging machine, wherein said automatic packaging machine comprises a container forming unit or a preformed container supply unit provided with means for supplying a supply container row (A1), in which flexible containers (A) are aligned in a horizontal longitudinal direction (X) and orientated in one and the same vertical plane, and a filling unit provided with means for filling flexible containers (A) arranged in at least two parallel filling container rows (A2, A3) and closing them, and wherein said transfer device comprises means for transferring the flexible containers (A) from said supply container row (A1) to said filling container rows (A2, A3), **characterised in that** the transfer device comprises:
at least two transverse guide elements (15, 16) fixed to a base support (50) in positions parallel to a horizontal transverse direction (Y) perpendicular to said supply container row (A1);
at least two gripper-holding carriages (13, 14) respectively assembled to be moved simultaneously in opposite directions along said transverse guide elements (15, 16) driven by transverse operating means,
at least two vertical guide elements (11, 12) respectively fixed to said gripper-holding carriages (13, 14) in positions parallel to a vertical direction (Z);
at least two guide supports (9, 10) respectively assembled to be moved along said vertical guide elements (11, 12) driven by vertical operating means;
at least two longitudinal guide elements (7, 8) respectively fixed to said guide supports (9, 10) in positions parallel to said longitudinal direction (X);
at least two respective gripper supports (5, 6) assembled to be moved along said longitudinal guide elements (7, 8);
at least two cam followers (19, 20) respectively assembled in said gripper supports (5, 6) and coupled to guide cams (17, 18) arranged in the corresponding gripper-holding carriages (13, 14) to move the gripper supports (5, 6) along the longitudinal guide elements (7, 8) when the guide supports (9, 10) are moved along the vertical guide elements (11, 12); and
at least two grippers (1, 2) respectively supported in the gripper supports (5, 6) and operated by respective gripper actuators (3, 4) to be moved between open and closed positions.

2. The transfer device according to claim 1, **characterised in that** said vertical operating means comprise a vertical movement actuator controlled to simultaneously move the guide supports (9, 10) in said vertical direction (Z) between a lower position in which the grippers (1, 2) are in a suitable position to grip corresponding contiguous flexible containers (A) from the supply container row (A1), and an upper position in which the grippers (1, 2) are in a suitable position to release the flexible containers (A) at the level of the filling container rows (A2, A3) which are above the supply container row (A1).

3. The transfer device according to claim 2, **characterised in that** said guide cams (17, 18) define a combined trajectory in longitudinal and vertical directions (X, Z) moving the gripper supports (5, 6) between a gripping position, which is reached when the guide supports (9, 10) are in said lower position and in which the grippers (1, 2) are separated in said longitudinal direction (X) by a distance equivalent to the distance between two contiguous flexible containers (A) in the supply container row (A1), and a delivery position, which is reached when the guide supports (9, 10) are in said upper position and in which the grippers (1, 2) are separated in the longitudinal direction (X) by a distance equivalent to the distance between two contiguous flexible containers (A) in the filling container rows (A2, A3).

4. The transfer device according to claim 3, **characterised in that** said transverse operating means comprise a transverse movement actuator controlled to simultaneously move the gripper-holding carriages (13, 14) in said transverse direction (Y) between an aligned position which is simultaneous with the lower position of the guide supports (9, 10) and in which the grippers (1,2) are aligned with the supply container row (A1), and a misaligned position which is simultaneous with the upper position of the guide supports (9, 10) and in which the grippers (1, 2) are mutually misaligned and respectively aligned with the filling container rows (A2, A3).

5. The transfer device according to claim 4, **characterised in that** in said misaligned position, the grippers (1, 2) are aligned with vertical planes symmetrical with respect to the vertical plane in which the supply container row (A1) is orientated.

6. The transfer device according to claim 2, **characterised in that** the vertical operating means comprise a raising carriage (21) operated by said vertical movement actuator to be moved along a raising vertical guide element (22) fixed to the base support (50) in a position parallel to the vertical direction (Z), at least two raising transverse guide elements (23, 24) fixed to said raising carriage (21) in positions parallel to the transverse direction (Y), and at least two connection members (25, 26) having lower ends respectively fixed to the guide supports (9, 10) and upper ends provided with rolling or sliding means (27, 28) respectively coupled to said raising transverse guide elements (23, 24) such that they can be moved along same.

7. The transfer device according to claim 6, **characterised in that** the vertical operating means further comprise an endless chain or belt (29) assembled on pulleys (30, 31) arranged such that said endless chain or belt (29) has a vertical section to which the raising carriage (21) is fixed, wherein the vertical movement actuator is operatively connected to rotate one of said pulleys (30, 31) and alternately move the endless chain or belt (29) in opposite directions.

8. The transfer device according to claim 4, **characterised in that** the transverse operating means comprise an oscillating shaft (32) assembled on the base support (50) in a position parallel to the longitudinal direction (X) and operated by said transverse movement actuator to alternately rotate a predetermined angle in opposite directions, at least two rocker arms (33, 34) connected to said oscillating shaft (32) and at least two connecting rods (35, 36) having first ends respectively connected in an articulated manner to said rocker arms (33, 34) and second ends respectively connected in an articulated manner to the gripper-holding carriages (13, 14).

9. The transfer device according to claim 8, **characterised in that** the transverse operating means further comprise a follower shaft (37), a follower arm (38) fixed to said follower shaft (37), a cam follower (39) assembled in said follower shaft (37) and arranged to follow the profile of a rotating cam (40), a transmission arm (41) fixed to the follower shaft (37), and an oscillation transmission element (42) having a first end connected in an articulated manner to said transmission arm (41) and a second end connected in an articulated manner to a lever arm (43) fixed to the oscillating shaft (32), wherein the transverse movement actuator is operatively connected to rotate said rotating cam (40).

10. The transfer device according to claim 6 or 7, **characterised in that** said vertical movement actuator is an electric motor.

11. The transfer device according to claim 10, **characterised in that** said vertical movement actuator is an electrically controlled servomotor.

12. The transfer device according to claim 8 or 9, **characterised in that** said transverse movement actuator is an electric motor.

13. The transfer device according to claim 12, **characterised in that** said transverse movement actuator is an electrically controlled servomotor.

## Patentansprüche

1. Überführungsvorrichtung zum Überführen leerer flexibler Behälter von einer Behälterreihe zu zwei oder mehr Behälterreihen, verwendbar in einer automatischen Verpackungsmaschine, wobei die genannte automatische Verpackungsmaschine eine Behälter formende Einheit oder eine vorgeformte Behälter liefernde Einheit, welche mit Mitteln zur Lieferung von einer Lieferbehälterreihe (A1) versehen ist, in welcher flexible Behälter (A) in einer horizontalen Längsrichtung (X) fluchten und in derselben vertikalen Ebene gerichtet sind, und eine Fülleinheit, welche mit Mitteln zum Füllen flexibler Behälter (A) versehen ist, welche in mindestens zwei parallelen Füllbehälterreihen (A2, A3) angeordnet sind und zum Schließen derselben, umfasst, und wobei die genannte Überführungsvorrichtung Mittel zum Überführen der flexiblen Behälter (A) von der genannten Lieferbehälterreihe (A1) zu den genannten Füllbehälterreihen (A2, A3) umfasst, **dadurch gekennzeichnet, dass** die Überführungsvorrichtung Folgendes umfasst:
mindestens zwei transversale Führungselemente (15, 16), welche an einer Basisstütze (50) in zu einer horizontalen transversalen Richtung (Y) parallelen und zur genannten Lieferbehälterreihe (A1) senkrechten Stellungen befestigt sind;
mindestens zwei Greifer tragende Fahrgestelle (13, 14), welche jeweils montiert sind, um, von transversalen Betriebsmitteln getrieben, gleichzeitig in entgegengesetzten Richtungen entlang den genannten transversalen Führungselementen (15, 16) bewegt zu werden,
mindestens zwei vertikale Führungselemente (11, 12), welche jeweils an den genannten Greifer tragenden Fahrgestellen (13, 14) in zu einer vertikalen Richtung (Z) parallelen Stellungen befestigt sind;
mindestens zwei Führungsstützen (9, 10), welche jeweils montiert sind, um, von vertikalen Betriebsmitteln getrieben, entlang den genannten vertikalen Führungselementen (11, 12) bewegt zu werden;
mindestens zwei longitudinale Führungselemente (7, 8), welche jeweils an den genannten Führungsstützen (9, 10) in zu der genannten Längsrichtung (X) parallelen Stellungen befestigt sind;
mindestens zwei jeweilige Greiferstützen (5, 6), welche montiert sind, um entlang den genannten longitudinalen Führungselementen (7, 8) bewegt zu werden;
mindestens zwei Nockenmitläufer (19, 20), welche jeweils auf den genannten Greiferstützen (5, 6) montiert und mit in den entsprechenden Greifer tragenden Fahrgestellen (13, 14) angeordneten Führungsnocken (17, 18) gekoppelt sind, um die Greiferstützen (5, 6) entlang den longitudinalen Führungselementen (7, 8) zu bewegen, wenn die Führungsstützen (9, 10) entlang den vertikalen Führungselementen (11, 12) bewegt werden; und
mindestens zwei Greifer (1, 2), welche sich jeweils auf die Greiferstützen (5, 6) stützen und von jeweiligen Greiferaktuatoren (3, 4) getrieben werden, um zwischen offenen und geschlossenen Stellungen bewegt zu werden.

2. Überführungsvorrichtung nach Anspruch 1, **dadurch gekennzeichnet, dass** die genannten vertikalen Betriebsmittel einen vertikalen Bewegungsaktuator umfassen, welcher gesteuert wird, um gleichzeitig die Führungsstützen (9, 10) in der genannten vertikalen Richtung (Z) zwischen einer unteren Stellung, in der die Greifer (1, 2) in einer geeigneten Stellung sind, um entsprechenden angrenzenden flexiblen Behälter (A) von der Lieferbehälterreihe (A1) zu greifen, und einer oberen Stellung, in der die Greifer (1, 2) in einer geeigneten Stellung sind, um die flexiblen Behälter (A) auf der Höhe der sich oberhalb der Lieferbehälterreihe (A1) befindenden Füllbehälterreihen (A2, A3) zu lösen, zu bewegen.

3. Überführungsvorrichtung nach Anspruch 2, **dadurch gekennzeichnet, dass** die genannten Führungsnocken (17, 18) eine kombinierte Bahn in der longitudinalen und der vertikalen Richtungen (X, Z) definieren, wobei die Greiferstützen (5, 6) zwischen einer Griffstellung, die erreicht wird, wenn sich die Führungsstützen (9, 10) in der genannten unteren Stellung befinden, und in der die Greifer (1, 2) in der genannten Längsrichtung (X) eine Entfernung aufweisen, die äquivalent zu der Entfernung zwischen zwei angrenzenden flexiblen Behältern (A) in der Lieferbehälterreihe (A1) ist, und einer Förderstellung, die erreicht wird, wenn sich die Führungsstützen (9, 10) in der genannten oberen Stellung befinden, und in der die Greifer (1, 2) in der Längsrichtung (X) eine Entfernung aufweisen, die äquivalent zu der Entfernung zwischen zwei angrenzenden flexiblen Behälter (A) in den Füllbehälterreihen (A2, A3) ist, bewegt werden.

4. Überführungsvorrichtung nach Anspruch 3, **dadurch gekennzeichnet, dass** die genannten transversalen Betriebsmittel einen transversalen Bewegungsaktuator umfassen, welcher gesteuert wird, um gleichzeitig die Greifer tragenden Fahrgestelle (13, 14) in der genannten transversalen Richtung (Y) zwischen einer fluchtenden Stellung, die zeitgleich mit der unteren Stellung der Führungsstützen (9, 10) stattfindet und in der die Greifer (1, 2) mit der Lieferbehälterreihe (A1) fluchten, und einer nicht fluchtenden Stellung, die zeitgleich mit der oberen Stellung der Führungsstützen (9, 10) stattfindet und in der die Greifer (1, 2) nicht zueinander fluchten und jeweils mit den Füllbehälterreihen (A2, A3) fluchten, zu bewegen.

5. Überführungsvorrichtung nach Anspruch 4, **dadurch gekennzeichnet, dass** in der genannten nicht fluchtenden Stellung, die Greifer (1, 2) mit vertikalen Ebenen fluchten, welche symmetrisch in Bezug auf die vertikale Ebene, in welcher die Lieferbehälterreihe (A1) gerichtet ist, sind.

6. Überführungsvorrichtung nach Anspruch 2, **dadurch gekennzeichnet, dass** die vertikalen Betriebsmittel ein Hebefahrgestell (21), welches von dem genannten vertikalen Bewegungsaktuator getrieben wird, um entlang einem vertikalen Hebeführungselement (22), welches an der Basisstütze (50) in einer zur vertikalen Richtung (Z) parallelen Stellung befestigt ist, bewegt zu werden, mindestens zwei transversale Hebeführungselemente (23, 24), welche an dem genannten Hebefahrgestell (21) in zur transversalen Richtung (Y) parallelen Stellungen befestigt sind, und mindestens zwei Verbindungsteile (25, 26), welche untere Enden aufweisen, die jeweils an den Führungsstützen (9, 10) befestigt sind, und mit Roll- oder Gleitmittel (27, 28) versehene obere Enden aufweisen, die jeweils mit den genannten transversalen Hebeführungselementen (23, 24) gekoppelt sind, so dass sie entlang denselben bewegt werden können, umfassen.

7. Überführungsvorrichtung nach Anspruch 6, **dadurch gekennzeichnet, dass** die vertikalen Betriebsmittel zusätzlich eine Endloskette oder einen Endlosriemen (29) umfassen, die auf Riemenscheiben (30, 31) montiert ist, welche derart angeordnet sind, dass die genannte Endloskette oder der genannte Endlosriemen (29) einen vertikalen Abschnitt aufweist, an dem das Hebefahrgestell (21) befestigt ist, wobei der vertikale Bewegungsaktuator betriebsfähig verbunden ist, um eine der genannten Riemenscheiben (30, 31) zu drehen und abwechselnd die Endloskette oder den Endlosriemen (29) in entgegengesetzten Richtungen zu bewegen.

8. Überführungsvorrichtung nach Anspruch 4, **dadurch gekennzeichnet, dass** die transversalen Betriebsmittel eine schwingende Welle (32), welche auf der Basisstütze (50) in einer zur Längsrichtung (X) parallelen Stellung montiert ist und von dem genannten transversalen Bewegungsaktuator getrieben wird, um abwechselnd einen vorgegebenen Winkel in entgegengesetzten Richtungen zu drehen, mindestens zwei Kipparme (33, 34), welche mit der genannten schwingenden Welle (32) verbunden sind, und mindestens zwei Verbindungsstangen (35, 36), welche erste Enden aufweisen, die jeweils gelenkig mit den genannten Kipparmen (33, 34) verbunden sind, und zweite Enden, die jeweils gelenkig mit den Greifer tragenden Fahrgestelle (13, 14) verbunden sind, umfassen.

9. Überführungsvorrichtung nach Anspruch 8, **dadurch gekennzeichnet, dass** die transversalen Betriebsmittel zusätzlich eine Mitläuferwelle (37), einen Mitläuferarm (38), welcher an der genannten Mitläuferwelle (37) befestigt ist, einen Nockenmitläufer (39), welcher auf der genannten Mitläuferwelle (37) montiert und dazu angeordnet ist, das Profil eines sich drehenden Nocken (40) zu folgen, einen Übertragungsarm (41), welcher an der Mitläuferwelle (37) befestigt ist, und ein Schwingung übertragendes Element (42), das ein erstes Ende aufweist, das gelenkig mit dem genannten Übertragungsarm (41) verbunden ist, und ein zweites Ende aufweist, das gelenkig mit einem an der schwingenden Welle (32) befestigten Hebelarm (43) verbunden ist, umfassen, wobei der transversale Bewegungsaktuator betriebsfähig verbunden ist, um den genannten sich drehenden Nocken (40) zu drehen.

10. Überführungsvorrichtung nach Anspruch 6 oder 7, **dadurch gekennzeichnet, dass** der genannte vertikale Bewegungsaktuator ein Elektromotor ist.

11. Überführungsvorrichtung nach Anspruch 10, **dadurch gekennzeichnet, dass** der genannte vertikale Bewegungsaktuator ein elektrisch gesteuerter Servomotor ist.

12. Überführungsvorrichtung nach Anspruch 8 oder 9, **dadurch gekennzeichnet, dass** der genannte transversale Bewegungsaktuator ein Elektromotor ist.

13. Überführungsvorrichtung nach Anspruch 12, **dadurch gekennzeichnet, dass** der genannte transversale Bewegungsaktuator ein elektrisch gesteuerter Servomotor ist.

## Revendications

1. Un dispositif de transfert pour transférer des conteneurs flexibles vides d'une rangée de conteneurs à deux ou plusieurs rangées de conteneurs, applicable à une machine d'emballage automatique, où ladite machine d'emballage automatique comprend une unité de formage de conteneurs ou une unité d'alimentation de conteneurs préformés pourvue de moyens pour alimenter une rangée de conteneurs (A1), dans laquelle des conteneurs flexibles (A) sont alignés dans une direction longitudinale horizontale (X) et orientés dans un même plan vertical, et une unité de remplissage pourvue de moyens pour remplir des conteneurs flexibles (A) disposés dans, au moins, deux rangées de conteneurs de remplissage parallèles (A2, A3) et les fermer, et où ledit dispositif de transfert comprend de moyens pour transférer les conteneurs flexibles (A) de ladite rangée de conteneurs d'alimentation (A1) auxdits rangées de conteneurs de remplissage (A2, A3), **caractérisé en ce que** le dispositif de transfert comprend :
au moins deux éléments de guidage transversaux (15, 16) fixés à un support de base (50) dans des positions parallèles à une direction transversale horizontale (Y) perpendiculaire à ladite rangé de conteneurs d'alimentation (A1) ;
au moins deux chariots porte-pinces (13, 14) assemblés respectivement pour être déplacés simultanément dans des directions opposées le long desdits éléments de guidage transversaux (15, 16) entraînés par des moyens d'opération transversaux ;
au moins deux éléments de guidages verticaux (11, 12) fixés respectivement auxdits chariots porte-pinces (13, 14) à des positions parallèles à la direction verticale (Z) ;
au moins deux supports de guidage (9, 10) respectivement assembles pour être déplacés le long desdits éléments de guidage verticaux (11, 12) entraînés par des moyens d'opération verticaux ;
au moins deux éléments de guidage longitudinaux (7, 8) fixés respectivement auxdits supports de guidage (9, 10) à des positions parallèles à ladite direction longitudinale (X) ;
au moins deux supports de pinces (5, 6) respectifs assemblés pour être déplacés le long desdits éléments de guidage longitudinaux (7, 8) ;
au moins deux suiveurs de cames (19, 20) assemblés respectivement sur lesdits supports de pinces (5, 6) et couplés aux cames de guidage (17, 18) disposées sur les chariots porte-pinces (13, 14) correspondants pour déplacer les supports de pinces (5, 6) le long des éléments de guidage longitudinaux (7, 8) lorsque les supports de guidage (9, 10) sont déplacés le long des éléments de guidage verticaux (11, 12) ; et
au moins deux pinces (1, 2) supportées respectivement sur les supports de pinces (5, 6) et entraînées par des actionneurs de pinces (3, 4) respectifs pour être déplacées entre des positions ouverte et fermée.

2. Dispositif de transfert selon la revendication 1, **caractérisé en ce que** lesdits moyens d'opération verticaux comprennent un actionneur de déplacement vertical commandé pour déplacer simultanément les supports de guidage (9, 10) dans ladite direction verticale (Z) entre une position inférieure dans laquelle les pinces (1,2) sont dans une position appropriée pour prendre des conteneurs flexibles (A) attenants correspondants de la rangée de conteneurs d'alimentation (A1) et une position supérieure dans laquelle les pinces (1, 2) sont dans une position appropriée pour libérer les conteneurs flexibles (A) au niveau des rangées de conteneurs de remplissage (A2, A3) qui sont au-dessus de la rangée de conteneurs d'alimentation (Al).

3. Dispositif de transfert selon la revendication 2, **caractérisé en ce que** lesdites cames de guidage (17, 18) définissent une trajectoire combinée dans des directions longitudinale et verticale (X, Z) en déplaçant les supports de pinces (5, 6) entre une position de prise qui est atteinte lorsque les supports de guidage (9, I0) sont dans ladite position inférieure et dans laquelle les pinces (1, 2) sont séparées dans ladite direction longitudinale (X) par une distance équivalente à la distance entre deux conteneurs flexibles (A) attenants dans la rangée de conteurs d'alimentation (Al), et une position de distribution, qui est atteinte lorsque les supports de guidage (9, 10) sont dans ladite position supérieure et dans laquelle les pinces (1, 2) sont séparées dans la direction longitudinale (X) par une distance équivalente à la distance entre deux conteneurs flexibles (A) attenants dans les rangées de conteneurs de remplissage (A2, A3).

4. Dispositif de transfert selon la revendication 3, **caractérisé en ce que** lesdits moyens d'opération transversaux comprennent un actionneur de déplacement transversal commandé pour déplacer simultanément les chariots porte-pinces (13, 14) dans ladite direction transversale (Y) entre une position alignée qui est simultanée avec la position inférieure des supports de guidage (9, 10) et dans laquelle les pinces (1, 2) sont alignées avec la rangée de conteneurs d'alimentation (Al), et une position désalignée qui est simultanée avec la position supérieure des supports de guidage (9, 10) et dans laquelle les pinces (1, 2) sont mutuellement désalignées et respectivement alignées avec les rangées de conteneurs de remplissage (A2, A3).

5. Dispositif de transfert selon la revendication 4, **caractérisé en ce que** dans ladite position désalignée, les pinces (1, 2) sont alignées avec des plans verticaux symétriques par rapport au plan vertical dans lequel est orientée la rangée de conteneurs d'alimentation (Al).

6. Dispositif de transfert selon la revendication 2, **caractérisé en ce que** les moyens d'opération verticaux comprennent un chariot élévateur (21) actionné par ledit actionneur de déplacement vertical pour être déplacé le long d'un élément de guidage vertical élévateur (22) fixé au support de base (50) dans une position parallèle à la direction verticale (Z), au moins deux éléments de guidages transversaux élévateurs (23, 24) fixés audit chariot élévateur (21) dans des positions parallèles à la direction transversale (Y), et au moins deux éléments de connexion (25, 26) ayant des extrémités inférieures respectivement fixées aux supports de guidage (9, 10) et des extrémités supérieures pourvues de moyens de roulement ou de coulissement (27, 28) respectivement couplés auxdits éléments de guidage transversaux élévateurs (23, 24) de manière à ce qu'ils puissent être déplacés le long de ceux-ci.

7. Dispositif de transfert selon la revendication 6, **caractérisé en ce que** les moyens d'opération verticaux comprennent, en outre, une chaîne ou courroie sans fin (29) assemblée sur des poulies (30, 31) disposées de manière à ce que ladite chaîne ou courroie sans fin (29) ait une section verticale sur laquelle le chariot élévateur (21) est fixé, où l'actionneur de déplacement vertical est relié opérationnellement pour faire tourner une desdites poulies (30, 31) et alternativement déplacer la chaîne ou courroie sans fin (29) dans des sens opposés.

8. Dispositif de transfert selon la revendication 4, **caractérisé en ce que** les moyens d'opération transversaux comprennent un arbre oscillant (32) assemblé sur le support de base (50) dans une position parallèle à la direction longitudinale (X) et actionné par ledit actionneur de déplacement transversal pour alternativement tourner d'un angle prédéterminé dans des sens opposés, au moins deux culbuteurs (33, 34) reliés audit arbre oscillant (32) et au moins deux bielles (35, 36) ayant des premières extrémités respectivement reliées d'une manière articulée auxdits culbuteurs (33, 34) et des deuxièmes extrémités respectivement reliées d'une manière articulée aux chariots porte-pinces (13, 14).

9. Dispositif de transfert selon la revendication 8, **caractérisé en ce que** les moyens d'opération transversaux comprennent en outre un arbre suiveur (37), un bras suiveur (38) fixé audit arbre suiveur (37), un suiveur de came (39) assemblé sur ledit arbre suiveur (37) et disposé pour suivre le profile d'une came rotative (40), un bras de transmission (41) fixé à l'arbre suiveur (37), et un élément de transmission d'oscillations (42) ayant une première extrémité reliée d'une manière articulée audit bras de transmission (41) et une deuxième extrémité reliée d'une manière articulée à un bras de levier (43) fixé à l'arbre oscillant (32), où l'actionneur de déplacement transversal est relié opérationnellement pour faire tourner ladite came rotative (40).

10. Dispositif de transfert selon la revendication 6 ou 7, **caractérisé en ce que** ledit actionneur de déplacement vertical est un moteur électrique.

11. Dispositif de transfert selon la revendication 10, **caractérisé en ce que** ledit actionneur de déplacement vertical est un servomoteur à commande électrique.

12. Dispositif de transfert selon la revendication 8 ou 9, **caractérisé en ce que** ledit actionneur de déplacement transversal est un moteur électrique.

13. Dispositif de transfert selon la revendication 12, **caractérisé en ce que** ledit actionneur de déplacement transversal est un servomoteur à commande électrique.
